# EUROPÄISCHE PATENTSCHRIFT

(11) **EP 3 341 443 B1**
(45) Veröffentlichungstag und Bekanntmachung des Hinweises auf die Patenterteilung: **19.06.2019**
(21) Anmeldenummer: 16745627.6
(22) Anmeldetag: 29.07.2016
(51) Int. Cl.: C09C 1/04, C08K 7/14, C08K 9/02, C08L 77/00, C09C 3/06, C09D 11/322, C09D 17/00, C08L 77/06

(54) **MIT SIO2-AGGLOMERATEN BESCHICHTETE ZINKSULFIDPIGMENTE**
ZINC SULFIDE PIGMENTS COATED WITH AGGLOMERATES OF SIO2
PIGMENTS DE SULFIDE DE ZINC ENROBÉS DE'AGGLOMÉRATS DE SIO2

(30) Priorität: 28.08.2015 EP 15182995
(43) Veröffentlichungstag der Anmeldung: 04.07.2018
(73) Patentinhaber: Merck Patent GmbH, 64293 Darmstadt (DE)
(72) Erfinder: KNIESS, Helge Bettina, 64380 Rossdorf (DE); QUITTMANN, Ulrich, 65439 Floersheim (DE); PIENING, Oliver Robert, 64846 Gross-Zimmern (DE)
(86) Internationale Anmeldenummer: PCT/EP2016/001321
(87) Internationale Veröffentlichungsnummer: WO 2017/036575

(56) Entgegenhaltungen:
- WO-A1-2013/185753
- US-A- 3 888 688
- RAJIV KUMAR ET AL: "In vitro and In vivo Optical Imaging Using Water-Dispersible, Noncytotoxic, Luminescent, Silica-Coated Quantum Rods", CHEMISTRY OF MATERIALS, Bd. 22, Nr. 7, 13. April 2010 (2010-04-13) , Seiten 2261-2267, XP55207527, ISSN: 0897-4756, DOI: 10.1021/cm902610f
- FEN WANG ET AL: "Structural Coloration Pigments based on Carbon Modified ZnS@SiO 2 Nanospheres with Low-Angle Dependence, High Color Saturation, and Enhanced Stability", ACS APPLIED MATERIALS AND INTERFACES, Bd. 8, Nr. 7, 24. Februar 2016 (2016-02-24), Seiten 5009-5016, XP55308441, US ISSN: 1944-8244, DOI: 10.1021/acsami.5b11919

## Beschreibung

Die vorliegende Erfindung betrifft beschichtete Zinksulfidpigmente sowie deren Verwendung, vorzugsweise in Lacken, Autolacken, Industrielacken, Pulverlacken, Kunststoffen, Druckfarben, keramischen Glasuren und kosmetischen Formulierungen sowie ein Verfahren für deren Herstellung.

Bekannt ist der Einsatz von Zinksulfid beispielsweise in Bildröhren, nachleuchtenden Zifferblättern in Uhren oder Elektrolumineszenz-Folien. Häufig wird das Zinksulfid für diese Anwendungen mit anderen Ionen dotiert, z. B. aus der Gruppe AI, Cu, Ag, Mn, Au oder Ga.

In Innenanwendungen wird Zinksulfid aufgrund des hohen Brechungsindex von 2,37 häufig als Weißpigment eingesetzt, z.B. in Fugen- und Dichtungsmassen, Grundierungen, Kunststoffen. Nachteilig für die Anwendung als Weißpigment im Außenbereich ist die eingeschränkte Beständigkeit von Zinksulfid gegenüber UV-Licht, Chemikalien und Temperatur. Bei der durch Witterungseinflüsse hervorgerufenen Selbstzersetzung des Zinksulfids entsteht beispielsweise Schwefelwasserstoff.

Aufgrund der geringen Mohsschen Härte von 3 besitzt Zinksulfid eine sehr geringe Abrasivität. Daher wird es in großem Umfang als Weißpigment in glasfaserverstärkten Kunststoffen eingesetzt. Nachteilig für die Anwendung als Weißpigment in glasfaserverstärkten Kunststoffen ist auch hier die eingeschränkte Beständigkeit von Zinksulfid gegenüber UV-Licht und Sauerstoff.

Titandioxid, eingesetzt als alternatives Weißpigment in glasfaserverstärkten Kunststoffen, weist aufgrund seiner höheren Mohsschen Härte von 5,5 - 6,5 eine hohe Abrasivität auf, was zum Bruch der Glasfasern führt, wodurch der pigmentierte Kunststoff erheblich an Festigkeit verliert.

Eine Möglichkeit der Stabilisierung von Zinksulfidpigmenten ist beispielsweise die Nachbehandlung der Pigmentoberfläche. Aus der WO 2008/065208 A1 ist beispielsweise die organische oder anorganische Nachbehandlung eines nanoskaligen und weitgehend transparentem Zinksulfids mit verringerten oder fehlenden Weißpigmenteigenschaften bekannt, beispielsweise mit SiO₂, Al₂O₃, ZrO₂, TiO₂ und/oder Metallphosphaten. Diese Nachbehandlung dient der Vermeidung von Agglomeration der Partikel, um eine optimale Verteilung in der Anwendung zu gewährleisten. Dies wird lediglich erreicht, wenn die Schichtdicke der Nachbehandlung wenige nm (monomolekular) nicht überschreitet. Allerdings führt die dort beschriebene Nachbehandlung nicht zu einer UV-Stabilisierung des Zinksulfids.

Aus der DE 10 2013 105 794 A1 ist die Herstellung von Zinksulfid-Teilchen mit einer Kobalt-haltigen Metalloxid-Beschichtung zur UV-Stabilisierung bekannt. Allerdings können diese Pigmente zu einer leichten Verfärbung des Kunststoffs führen. Weiterhin sind die Pigmente aufgrund des Kobaltgehalts physiologisch nicht unbedenklich.

Bekannt ist aus der Patentschrift AT 235438 weiterhin ein Verfahren zur Stabilisierung von Zinksulfid durch die Belegung mit SiO₂, bei dem das Weißpigment in einer wässrigen Lösung eines Alkalisalzes der Isopolysäuren des Siliziums suspendiert und diese Suspension mit einer Lösung eines Gemisches von Erdalkali- und/ oder Aluminiumchlorid geflockt wird. Die Flockungslösung enthält zusätzlich ein Salz der Metalle Eisen, Kobalt, Nickel, Kupfer, Cadmium, Titan, Zirkonium oder Cer. Dieses Verfahren ist allerdings aufgrund der komplexen Zusammensetzung sehr aufwendig und teuer. Die Patentschrift US 3 888 688 A offenbart anorganische Pigmente, bei denen Metallchalkogenide in einer SiO₂-Matrix eingelagert werden.

Aufgabe der vorliegenden Erfindung ist es Zinksulfid in der Weise zu stabilisieren, das es nahezu universell in allen denkbaren Innen- und Außenanwendungen eingesetzt werden kann. Das Deckvermögen des Zinksulfids sollte allerdings durch die Stabilisierung nicht beeinträchtigt werden.

Überraschenderweise wurde nun gefunden, dass reine Zinksulfidpigmente durch eine Beschichtung mit SiO₂-Agglomeraten auf der Oberfläche die oben angegebenen Nachteile nicht mehr aufweisen und somit das gewünschte Anforderungsprofil erfüllen. Die derart beschichteten Zinksulfidpigmente zeigen eine deutlich erhöhte Stabilität gegenüber UV-Licht, Chemikalien und Temperatur. Weiterhin wird durch diese Oberflächenbelegung das Deckvermögen des Zinksulfidpigments nicht oder nur unwesentlich beeinträchtigt. Das stabilisierte Zinksulfidpigment ist somit als Weißpigment insbesondere geeignet für den Einsatz in Kunststoffen, ganz besonders bevorzugt für glasfaserverstärkte Kunststoffe.

Gegenstand der vorliegenden Erfindung sind somit Zinksulfidpigmente, die sich dadurch auszeichnen, dass sie auf der Oberfläche mit SiO₂-Agglomeraten beschichtet sind.

Gegenstand der vorliegenden Erfindung ist weiterhin ein Verfahren zur Herstellung der beschichteten Zinksulfidpigmente sowie die Verwendung der Zinksulfidpigmente als Weißpigment und/oder als Additiv, u.a. in Farben, Lacken, Kunststoffen, Druckfarben sowie in kosmetischen Formulierungen.

Alle dem Fachmann bekannten und/oder kommerziell erhältlichen Zinksulfide können auf der Oberfläche mit den SiO₂-Agglomeraten belegt werden. Als Ausgangsmaterial kann beispielsweise kommerziell erhältliches Zinksulfid von der Fa. Sachtleben oder Fa. Tribotecc GmbH verwendet werden.

Zusätzlich zu der verbesserten Stabilität gegenüber UV-Licht, Chemikalien und Temperatur zeichnet sich das mit SiO₂-Agglomeraten beschichtete Zinksulfid durch eine glattere Partikeloberfläche aus, wodurch eine bessere Einarbeitung und Verteilung im Anwendungsmedium resultiert. Ein weiterer Vorteil der glatteren Oberfläche ist eine höhere Helligkeit bei vergleichbarem Deckvermögen, wodurch im Anwendungsmedium ein höherer Glanz und eine verbesserte Leuchtkraft erreicht werden kann, sowie ein flexibleres Einfärben der Medien bei gleichzeitig verbesserter Farbreinheit. Die Helligkeit wird in dieser Patentanmeldung bestimmt durch Messung des L*-Wertes im CIELab Farbraum (gemessen am geglätteten Pulver mit einem Chroma Meter CR 410, Konica Minolta Sensing Europe B.V.). Der L*-Wert des mit SiO₂-Agglomeraten beschichteten Zinksulfidpulvers beträgt vorzugsweise 96-100, insbesondere 97-99, wohingegen der L*-Wert des unbeschichteten Zinksulfids (Sachtolith HDS, Sachtleben) einen L*-Wert von 93,5-96,5, insbesondere 94-96, aufweist.

Kommerziell erhältliches Zinksulfid enthält häufig Verunreinigungen, wie Anteile von Bariumsulfat. Diese Verunreinigungen beeinflussen aber nicht die Beschichtung mit SiO₂-Agglomeraten bzw. das Ergebnis der Stabilisierung der erfindungsgemäßen Zinksulfidpigmente.

Die im Markt erhältlichen Zinksulfidpigmente sind weiterhin häufig bereits organisch nachbehandelt, d.h. auf der Oberfläche der Zinksulfidpigmente befindet sich bereits eine dünne (in der Regel < 5 nm) organische Schicht aus z.B. Fettsäuren, Carbonsäuren, Tensiden, Metallseifen, Alkoholen, Polyalkoholen, Polyethylenglykolen, organischen Estern, Phosphorsäureestern, organische Phosphonsäuren und Phosphonaten, Silanen, Siloxanen, organischen Titanaten, organische Zirkonaten, organische Sulfonaten, organische Sulfaten, damit die Pigmente beispielsweise leichter in wässrige Medien suspendiert werden können. Organisch nachbehandeltes Zinksulfid ist beispielsweise kommerziell erhältlich, z. B. Sachtolith HDS von der Sachtleben Chemie GmbH.

Für das erfindungsgemäße Zinksulfidpigment kann als Substrat sowohl ein organisch oder anorganisch nachbehandeltes Zinksulfid oder ein unbehandeltes Zinksulfid eingesetzt werden.

In einer bevorzugten Ausführungsform wird das Zinksulfidpigment vor der Beschichtung mit SiO₂-Agglomeraten mit einer organischen Schicht versehen, da es sich häufig leichter nachbeschichten lässt, insbesondere wenn die Beschichtung in einem wässrigen Medium erfolgt.

Die Größe der Zinksulfidpigmente ist an sich nicht kritisch und kann auf den jeweiligen Anwendungszweck abgestimmt werden. In der Regel haben die Zinksulfidpigmente eine Partikelgröße von 0,001 - 100 µm, vorzugsweise 0,005 - 50 µm, und insbesondere 0,01 - 1 µm.

Das geeignete Ausgangsmaterial, organisch oder anorganisch vorbehandelt oder unbehandeltes Zinksulfidpigment, weist vorzugsweise folgende Partikelgrößenverteilungen auf:
D₁₀ = 0,001 - 50 µm, vorzugsweise 0,005 - 10 µm
D₅₀ = 0,005 - 80 µm, vorzugsweise 0,05 - 20 µm
D₉₀ = 0,1 - 100 µm, vorzugsweise 0,1 - 50 µm.

Die Charakterisierung der Teilchengrößenverteilung findet mittels Laserbeugung statt. In der vorliegenden Anmeldung wird die Teilchengrößenverteilung mit dem Gerät Malvern Mastersizer 2000 bestimmt.

Die Form der eingesetzten Zinksulfidpigmente ist ebenfalls nicht kritisch und kann oval, kugel-, stäbchen- oder plättchenförmig sein. Bevorzugt sind kugelförmige Pigmente.

Die Beschichtung der Zinksulfidpigmente bedeutet in dieser Patentanmeldung, dass die komplette Oberfläche des Zinksulfidpigments mit SiO₂-Agglomeraten belegt ist.

Die SiO₂-Beschichtung auf den Zinksulfidpigmenten weist vorzugsweise eine Schichtdicke von 0,1 bis 300 nm, insbesondere von 0,1 bis 100 nm und ganz besonders bevorzugt von 1 bis 80 nm auf.

Der Gehalt an SiO₂ bezogen auf das Gesamtpigment beträgt in Abhängigkeit von der Partikelgröße des verwendeten Zinksulfids vorzugsweise 2 - 99 %, bevorzugt 5 - 80 % und besonders bevorzugt 5 - 40 %.

Die Beschichtung der Zinksulfidpigmente mit den SiO₂-Agglomeraten ist leicht handzuhaben. Sie kann beispielsweise in einem Wirbelbettreaktor durch Gasphasenbeschichtung, in einem Sprühtrockner, durch PVD, CVD, Sol-Gel-Methoden oder durch nasschemische Belegung (wässrig oder Lösemittel-basiert) erfolgen.

Das erfindungsgemäß stabilisierte Zinksulfid wird vorzugsweise nach dem nasschemischen Verfahren hergestellt.

Bei der Nassbeschichtung werden beispielsweise die Substrate (behandelte oder unbehandelte Zinksulfidpigmente) in Wasser suspendiert und mit einer Wasserglaslösung bei einem für die Hydrolyse geeigneten pH-Wert versetzt, der so gewählt wird, dass das SiO₂ direkt auf den Pigmenten ausgefällt wird, ohne dass es zu Nebenfällungen kommt. Der pH-Wert wird üblicherweise durch gleichzeitiges Zudosieren einer Base und/oder Säure konstant gehalten. Anschließend werden die behandelten Pigmente abgetrennt, gewaschen und bei 50 - 150 °C, vorzugsweise 80 - 120 °C für 6 - 18 h getrocknet und nachfolgend für 0,25 - 2 h geglüht. In der Regel liegen die Glühtemperaturen im Bereich von 200 - 600 °C, vorzugsweise 300 - 550 °C. Nachfolgend kann das geglühte Pigment noch gesiebt werden. Die Auffällung des SiO₂ auf das Zinksulfidpigment erfolgt in der Regel durch Zugabe einer Kalium- oder Natronwasserglas-Lösung, vorzugsweise einer Natronwasserglas-Lösung, bei einem geeigneten pH-Wert.

Die deutlich verbesserte Stabilität des mit SiO₂-Agglomeraten beschichteten Zinksulfids im Vergleich zu den Produkten aus dem Stand der Technik hinsichtlich UV-Licht, Temperatur und/oder Chemikalien eröffnet neue Anwendungsmöglichkeiten, z.B. im Außenbereich in dem Zinksulfidpigmente bisher wegen mangelnder Stabilität nicht eingesetzt werden konnten. Weiterhin kann beispielsweise die Herstellung von Infrarot-Gläsern und Infrarot-Keramiken, beispielsweise für Wärmebildkameras, Entfernungsmesser, Sensorik vereinfacht werden, da hier Zinksulfidpigmente als ein Schlüsselmaterial aufgrund der hohen Transparenz im IR-Bereich eingesetzt werden und beispielsweise mittels eines aufwändigen CVD Prozess auf Gläser aufgebracht werden. Weiterhin ist die erhöhte Stabilität des erfindungsgemäßen beschichteten Zinksulfidpigments vorteilhaft, wenn das Zinksulfid bei Temperaturen > 500 °C eingesetzt wird, z.B. wenn es weiter modifiziert werden muss oder wenn bei einem pH-Wert von < 2,5 gearbeitet werden muss.

Die Konzentration des beschichteten Zinksulfidpigments im zu pigmentierenden Anwendungssystem liegt in der Regel im Bereich von 0,01 - 20 Gew.%, vorzugsweise 0,05 - 10 und insbesondere 0,1 - 2 Gew.%, bezogen auf den Gesamtfestkörpergehalt des Systems. Sie ist in der Regel abhängig vom konkreten Anwendungsfall.

Die erfindungsgemäß hergestellten beschichteten Zinksulfidpigmente können in Lacken, z. B. Auto- und Industrielacke, lösemittel- und wasserbasierend, Pulverlacke, Kunststoffe, Druckfarben, Fugen, Dichtungsmassen, keramischen Glasuren oder kosmetischen Formulierungen eingesetzt werden. Besonders bevorzugt ist die Verwendung des erfindungsgemäßen Pigments in synthetischen organischen Polymeren sowie daraus gefertigten Formteilen. Unter den synthetischen organischen Polymeren sind insbesondere Duromere, Elastomere und Thermoplaste von Bedeutung. Das erfindungsgemäße Pigment ist insbesondere geeignet für glasfaserverstärkte Polyamide.

Gegenstand der Erfindung ist auch die Verwendung der erfindungsgemäßen Zinksulfidpigmente in Farben, Lacken, Pulverlacken, Druckfarben, Sicherheitsdruckfarben, Kunststoffen, keramischen Materialien, Emaillen, Gläsern, Papier, in Tonern für elektrophotographische Druckverfahren, im Saatgut, in Gewächshausfolien und Zeltplanen, als Absorber bei der Lasermarkierung von Papier und Kunststoffen, in kosmetischen Formulierungen, zur Herstellung von Pigmentanteigungen mit Wasser, organischen und/oder wässrigen Lösemitteln, zur Herstellung von Pigmentpräparationen und Trockenpräparaten, wie z. B. Granulate.

Die nachfolgenden Beispiele sind dazu gedacht, die Erfindung zu erläutern, ohne sie einzuschränken. Die Prozentangaben beziehen sich, sofern nicht anders angegeben, auf das Gewicht.

### Beispiele

### Beispiel 1: ZnS : SiO₂ = 89 : 11, 300 °C

100 g ZnS (Sachtolith HDS, Sachtleben Chemie GmbH) mit einer mittleren Teilchengröße von 210 nm (gemessen nach der Laserdiffraktionsmethode mit einem Messinstrument der Firma Malvern Ltd., UK, Malvern 2000) werden in 2 I entmineralisiertem Wasser unter Rühren auf 75 °C erhitzt.

Nun wird mit einer 32 %igen Natronlauge der pH-Wert der Suspension auf 7,5 eingestellt.

Es folgt das Zudosieren einer Natronwasserglaslösung (45 g Natronwasserglaslösung, enthaltend 27,6 % SiO₂, werden in 47 g voll entsalztem Wasser gelöst), wobei der pH-Wert durch gleichzeitiges Zutropfen einer 10 %igen Salzsäure konstant bei 7,5 gehalten wird. Nach vollständiger Zugabe wird 0,5 h nachgerührt. Anschließend wird der pH-Wert mit 10 %iger Salzsäure auf 5 gestellt und 15 min. nachgerührt. Das Produkt wird filtriert, gewaschen, getrocknet, bei 300 °C geglüht und durch ein 100 µm Sieb gesiebt.

### Beispiel 2: ZnS : SiO₂ = 91 : 9, 450 °C

100 g ZnS (Sachtolith HDS, Sachtleben Chemie GmbH) mit einer mittleren Teilchengröße von 210 nm (gemessen nach der Laserdiffraktionsmethode mit einem Messinstrument der Firma Malvern Ltd., UK, Malvern 2000) werden in 2 I entmineralisiertem Wasser unter Rühren auf 75 °C erhitzt.

Nun wird mit einer 32 %igen Natronlauge der pH-Wert der Suspension auf 9,0 eingestellt. Es folgt das Zudosieren einer Natronwasserglaslösung (36,2 g Natronwasserglaslösung, enthaltend 27,6 % SiO₂, werden in 36,2 g voll entsalztem Wasser gelöst), wobei der pH-Wert durch gleichzeitiges Zutropfen einer 10 %igen Salzsäure konstant bei 9,0 gehalten wird. Nach vollständiger Zugabe wird 0,5 h nachgerührt. Anschließend wird der pH-Wert mit 10 %iger Salzsäure auf 4 gestellt und 15 min. nachgerührt. Das Produkt wird filtriert, gewaschen, getrocknet, bei 450 °C geglüht und durch ein 100 µm Sieb gesiebt.

### Beispiel 3: ZnS : SiO₂ = 91:9, 500 °C, Essigsäure

100 g ZnS (Sachtolith HDS, Sachtleben Chemie GmbH) mit einer mittleren Teilchengröße von 210 nm (gemessen nach der Laserdiffraktionsmethode mit einem Messinstrument der Firma Malvern Ltd., UK, Malvern 2000) werden in 2 I entmineralisiertem Wasser unter Rühren auf 75 °C erhitzt.

Nun wird mit einer 32 %igen Natronlauge der pH-Wert der Suspension auf 7,5 eingestellt. Es folgt das Zudosieren einer Natronwasserglaslösung (36,2 g Natronwasserglaslösung, enthaltend 27,6 % SiO₂, werden in 36,2 g voll entsalztem Wasser gelöst), wobei der pH-Wert durch gleichzeitiges Zutropfen einer 3 %igen Essigsäure konstant bei 7,5 gehalten wird. Nach vollständiger Zugabe wird 0,5 h nachgerührt. Anschließend wird der pH-Wert mit 3 %iger Essigsäure auf 4 gestellt und 15 min. nachgerührt. Das Produkt wird filtriert, gewaschen, getrocknet, bei 450 °C geglüht und durch ein 100 µm Sieb gesiebt.

### Beispiel 4: ZnS : SiO₂ = 83 : 17, 450 °C

100 g ZnS (Sachtolith HDS, Sachtleben Chemie GmbH) mit einer mittleren Teilchengröße von 210 nm (gemessen nach der Laserdiffraktionsmethode mit einem Messinstrument der Firma Malvern Ltd., UK, Malvern 2000) werden in 2 I entmineralisiertem Wasser unter Rühren auf 75 °C erhitzt.

Nun wird mit einer 32 %igen Natronlauge der pH-Wert der Suspension auf 8,0 eingestellt. Es folgt das Zudosieren einer Natronwasserglaslösung (72,5 g Natronwasserglaslösung, enthaltend 27,6 % SiO₂, werden in 72,5 g voll entsalztem Wasser gelöst), wobei der pH-Wert durch gleichzeitiges Zutropfen einer 10 %iger Salzsäure konstant bei 8,0 gehalten wird. Nach vollständiger Zugabe wird 0,5 h nachgerührt. Anschließend wird der pH-Wert mit 10 %iger Salzsäure auf 5 gestellt und 15 min. nachgerührt. Das Produkt wird filtriert, gewaschen, getrocknet, bei 450 °C geglüht und durch ein 100 µm Sieb gesiebt.

### Beispiel 5: ZnS : SiO₂ = 67 : 33, 450 °C

100 g ZnS (Sachtolith L, Sachtleben Chemie GmbH) mit einer mittleren Teilchengröße von 220 nm (gemessen nach der Laserdiffraktionsmethode mit einem Messinstrument der Firma Malvern Ltd., UK, Malvern 2000) werden in 2 l entmineralisiertem Wasser unter Rühren auf 75 °C erhitzt.

Nun wird mit einer 32 %igen Natronlauge der pH-Wert der Suspension auf 7,5 eingestellt. Es folgt das Zudosieren einer Natronwasserglaslösung (181,2 g Natronwasserglas Lösung, enthaltend 27,6 % SiO₂, werden in 181,1 g voll entsalztem Wasser gelöst), wobei der pH-Wert durch gleichzeitiges Zutropfen einer 10 %iger Salzsäure konstant bei 7,5 gehalten wird. Nach vollständiger Zugabe wird 0,5 h nachgerührt. Anschließend wird der pH-Wert mit 10 %iger Salzsäure auf 5 gestellt und 15 min. nachgerührt. Das Produkt wird filtriert, gewaschen, getrocknet, bei 450 °C geglüht und durch ein 100 µm Sieb gesiebt.

### Beispiel 6: ZnS : SiO₂ = 89 : 11, 450 °C

100 g ZnS (Sachtolith HDS, Sachtleben Chemie GmbH) mit einer mittleren Teilchengröße von 210 nm (gemessen nach der Laserdiffraktionsmethode mit einem Messinstrument der Firma Malvern Ltd., UK, Malvern 2000) werden in 2 l entmineralisiertem Wasser unter Rühren auf 75 °C erhitzt.

Nun wird mit einer 32 %igen Natronlauge der pH-Wert der Suspension auf 7,5 eingestellt.

Es folgt das Zudosieren einer Natronwasserglaslösung (45 g Natronwasserglaslösung, enthaltend 27,6 % SiO₂, werden in 47 g voll entsalztem Wasser gelöst), wobei der pH-Wert durch gleichzeitiges Zutropfen einer 10 %igen Salzsäure konstant bei 7,5 gehalten wird. Nach vollständiger Zugabe wird 0,5 h nachgerührt. Anschließend wird der pH-Wert mit 10 %iger Salzsäure auf 5 gestellt und 15 min. nachgerührt. Das Produkt wird filtriert, gewaschen, getrocknet, bei 450 °C geglüht und durch ein 100 µm Sieb gesiebt.
Das Pulver weist einen L*-Wert (gemessen mit einem Chroma Meter CR 410, Konica Minolta Sensing Europe B.V.) von 97,3 auf.

### Beispiel 7: ZnS : SiO₂ = 93 : 7, 450 °C

100 g ZnS (Sachtolith HDS, Sachtleben Chemie GmbH) mit einer mittleren Teilchengröße von 210 nm (gemessen nach der Laserdiffraktionsmethode mit einem Messinstrument der Firma Malvern Ltd., UK, Malvern 2000) werden in 2 l entmineralisiertem Wasser unter Rühren auf 75 °C erhitzt.

Nun wird mit einer 32 %igen Natronlauge der pH-Wert der Suspension auf 7,5 eingestellt. Es folgt das Zudosieren einer Natronwasserglaslösung (43,5 g Natronwasserglaslösung, enthaltend 27,6 % SiO₂, werden in 43,5 g voll entsalztem Wasser gelöst), wobei der pH-Wert durch gleichzeitiges Zutropfen einer 10 %igen Salzsäure konstant bei 7,5 gehalten wird. Nach vollständiger Zugabe wird 0,5 h nachgerührt. Anschließend wird der pH-Wert mit 10 %iger Salzsäure auf 4 gestellt und 15 min. nachgerührt. Das Produkt wird filtriert, gewaschen, getrocknet, bei 450 °C geglüht und durch ein 100 µm Sieb gesiebt.
Das Pulver weist einen L*-Wert (gemessen mit einem Chroma Meter CR 410, Konica Minolta Sensing Europe B.V.) von 98,3 auf.

### Beispiel 8: ZnS : SiO₂ = 91 : 9, 450 °C

100 g ZnS (Sachtolith HDS, Sachtleben Chemie GmbH) mit einer mittleren Teilchengröße von 210 nm (gemessen nach der Laserdiffraktionsmethode mit einem Messinstrument der Firma Malvern Ltd., UK, Malvern 2000) werden in 2 l entmineralisiertem Wasser unter Rühren auf 75 °C erhitzt.

Nun wird mit einer 32 %igen Natronlauge der pH-Wert der Suspension auf 7,5 eingestellt. Es folgt das Zudosieren einer Natronwasserglaslösung (36,2 g Natronwasserglaslösung, enthaltend 27,6 % SiO₂, werden in 36,2 g voll entsalztem Wasser gelöst), wobei der pH-Wert durch gleichzeitiges Zutropfen einer 10 %igen Salzsäure konstant bei 7,5 gehalten wird. Nach vollständiger Zugabe wird 0,5 h nachgerührt. Anschließend wird der pH-Wert mit 10 %iger Salzsäure auf 4 gestellt und 15 min. nachgerührt. Das Produkt wird filtriert, gewaschen, getrocknet, bei 450 °C geglüht und durch ein 100 µm Sieb gesiebt.
Das Pulver weist einen L*-Wert (gemessen mit einem Chroma Meter CR 410, Konica Minolta Sensing Europe B.V.) von 97,6 auf.

### Stabilitätsuntersuchungen

Durch die SiO₂-Beschichtung weist das beschichtete Produkt gegenüber unbeschichtetem Zinksulfid eine um 100 K höhere Temperaturstabilität auf, d.h. 650-700 °C statt 550-600 °C, gemessen per TGA Methode mit dem Gerät NETZSCH TG 209F1 220-10-211-K. Dadurch kann die Entstehung von giftigem Schwefeldioxid bei Einwirkung von hohen Temperaturen vermieden werden
Durch die Beschichtung mit SiO₂-Agglomeraten findet weiterhin eine Stabilisierung des Zinksulfids gegenüber Chemikalien, insbesondere Säuren, statt. Hierzu wird jeweils eine 10 %ige wässrige Suspension der erfindungsgemäßen Produkte hergestellt, unter Rühren der pH-Wert mit 10 %iger Salzsäure eingestellt und die Menge des frei werdenden Schwefelwasserstoffs gemessen (Dräger Prüfröhrchen, Sachnummer 8101461). Während bei unbeschichtetem ZnS bereits bei einem pH-Wert von 2,5 messbare Mengen an Schwefelwasserstoff entstehen, sind diese bei mit SiO₂-Agglomeraten beschichtetem ZnS selbst bei pH 1,8 nicht messbar:

| Produkt | pH | H₂S Menge in ppm |
|---|---|---|
| ZnS (Sachtolith HDS) | 2,5 | 0,2 |
| | 2,0 | 1 |
| | 1,8 | 4 |
| | | |
| Produkt aus Beispiel 4 | 2,5 | nicht messbar (< 0,2 ppm) |
| | 2,0 | nicht messbar (< 0,2 ppm) |
| | 1,8 | nicht messbar (< 0,2 ppm) |

### Anwendungsbeispiel

### Anwendungsbeispiel: Einarbeitung von ZnS/ SiO₂ in glasfaserverstärktes Polyamid

Das aus Beispiel 4 erhaltene Pigment wird mittels Extruder 0,4 %ig in glasfaserverstärktes Polyamid (Akulon K224-LG6/E, DSM) eingearbeitet. Dieses Compound wird dann auf einer Spritzgußmaschine zu Testplatten geformt und einem UV-Stabilitätstest unterworfen.

Messbedingungen (in Akulon K224-LG6/E black; enthält 30 % Glasfasern):

| | |
|---|---|
| Accelerated test conditions: | Atlas Weather-Ometer Ci4000 |
| Test standard: | VW PV 3930 |
| Specifications of test conditions: | Weathering in Moist, Hot Climate |
| - Light source: | Xenon arc |
| - Filtering: | Borosilicate S inner and outer |
| - Radiation intensity (regulated): | 0,50 W/m² /nm at 340 nm |
| - Black standard temperature: | 65 +/- 2 °C |
| - Chamber air temperature: | 40 +/- 3 °C |
| - Dry/wet cycle: | 102' dry/ 18' water spray |
| - Relative humidity: | 70 +/- 10 % |
| - Light/dart cycle: | Continuous illumination |

### Testergebnisse:

| Probe | Bewertung Grau-Skala (750 h) |
|---|---|
| TiO₂ Referenz (Kronos2900, KRONOS) | 3 |
| ZnS Referenz (Sachtolith HDS, Sachtleben Chemie GmbH) | 2 |
| ZnS/SiO₂ (Beispiel 2) | 3 |
| ZnS/SiO₂ (Beispiel 4) | 3-4 |

**Tabelle 1:**

| | Exposure Time [h] | L* | a* | b* | Delta E* | Grey scale level |
|---|---|---|---|---|---|---|
| TiO₂ (Referenz) | 0 | 16,2 | 0,2 | -1,7 | 0,0 | 5 |
| | 250 | 17,5 | 0,1 | -2,0 | 1,4 | 4-5 |
| | 500 | 18,0 | 0 | -1,6 | 1,9 | 4-5 |
| | 700 | 23,2 | -0,3 | -0,7 | 7,1 | 3 |
| ZnS (Referenz) | 0 | 16,7 | -0,1 | -0,6 | 0,0 | 5 |
| | 250 | 22,3 | 0,1 | 0,2 | 5,6 | 3-4 |
| | 500 | 23,8 | 0,1 | 0,7 | 7,3 | 3 |
| | 700 | 25,7 | 0,3 | 0,2 | 9,1 | 2 |
| ZnS/SiO₂ (Beispiel 2) | 0 | 16,1 | 0 | -1,4 | 0,0 | 5 |
| | 250 | 17,9 | 0 | -0,4 | 2,1 | 4 |
| | 500 | 19,8 | 0,2 | 0,1 | 4,0 | 3-4 |
| | 700 | 22,3 | 0,1 | -0,2 | 6,3 | 3 |
| ZnS/SiO₂ (Beispiel 4) | 0 | 14,9 | 0,2 | -1,4 | 0,0 | 5 |
| | 250 | 16,9 | 0,2 | -0,5 | 2,2 | 4 |
| | 500 | 17,6 | 0,1 | -0,1 | 3,0 | 4 |
| | 700 | 19,3 | -0,1 | -0,5 | 4,5 | 3-4 |

Tabelle 1 zeigt, dass die erfindungsgemäßen mit SiO₂-Agglomeraten beschichteten Zinksulfide gemäß der Beispiele 2 und 4 im Vergleich zu dem Referenzpigment ZnS eine deutlich höhere UV-Stabilität (nach 750 h Belichtung) zeigen und gegenüber dem Referenzpigment TiO₂ eine vergleichbare UV-Stabilität (nach 750 h Belichtung) aufweisen.

Anmerkungen zu den mittleren Korngrößen (alle gemessen bei Merck nach der Laserdiffraktionsmethode mit einem Messinstrument der Firma Malvern Ltd., UK, Malvern 2000):

| | |
|---|---|
| ZnS: Sachtolith HDS (Sachtleben) | D₅₀ = 210 nm; D₉₅ = 0,62 µm |
| TiO₂: Kronos 2900 (Kronos) | D₅₀ = 180 nm; D₉₅ = 0,84 µm |

## Patentansprüche

1. Beschichtetes Zinksulfidpigment, **dadurch gekennzeichnet, dass** es auf der Oberfläche mit SiO₂-Agglomeraten beschichtet ist.

2. Beschichtetes Zinksulfidpigment nach Anspruch 1, **dadurch gekennzeichnet, dass** das Zinksulfid Partikelgrößen von 0,001 - 100 µm aufweist.

3. Beschichtetes Zinksulfidpigment nach Anspruch 1 oder 2, **dadurch gekennzeichnet, dass** als Substrat ein anorganisch oder organisch vorbehandeltes Zinksulfidpigment verwendet wird.

4. Beschichtetes Zinksulfidpigment nach einem oder mehreren der Ansprüche 1 bis 3, dadurch gezeichnet, dass das Zinksulfidpigment oval, kugel-, stäbchen- oder plättchenförmig ist.

5. Beschichtetes Zinksulfidpigment nach einem oder mehreren der Ansprüche 1 bis 4, dadurch gezeichnet, dass das Zinksulfidpigment kugelförmig ist.

6. Beschichtetes Zinksulfidpigment nach einem oder mehreren der Ansprüche 1 bis 5, dadurch gezeichnet, dass die SiO₂-Beschichtung auf dem Zinksulfidpigment eine Schichtdicke von 0,1 bis 300 nm aufweist.

7. Beschichtetes Zinksulfidpigment nach einem oder mehreren der Ansprüche 1 bis 6, dadurch gezeichnet, dass der Gehalt an SiO₂ bezogen auf das beschichtete Pigment 2 bis 100 % beträgt.

8. Verfahren zur Herstellung des beschichteten Zinksulfidpigments nach einem oder mehreren der Ansprüche 1 bis 7, **dadurch gekennzeichnet, dass** die Beschichtung des Zinksulfidpigments mit SiO₂-Agglomeraten in einem Wirbelbettreaktor, durch Gasphasenbeschichtung, durch PVD, CVD oder durch nasschemische Belegung erfolgt.

9. Verfahren nach Anspruch 8, **dadurch gekennzeichnet, dass** bei der nasschemischen Beschichtung das Zinksulfidpigment in Wasser suspendiert und mit einer Wasserglaslösung bei einem für die Hydrolyse geeigneten pH-Wert versetzt wird, der so gewählt ist, dass das SiO₂ direkt auf das Pigment ausgefällt wird, der pH-Wert durch gleichzeitiges Zudosieren einer Base und/oder Säure konstant gehalten wird, und das so belegte Zinksulfidpigment abgetrennt, gewaschen, getrocknet wird und nachfolgend bei 200 - 600 °C geglüht und zuletzt gesiebt wird.

10. Verwendung des beschichteten Zinksulfidpigments nach einem oder mehreren der Ansprüche 1 bis 7 als Additiv oder Weißpigment in Farben, Lacken, Pulverlacken, Druckfarben, Sicherheitsdruckfarben, Kunststoffen, Formkörpern, keramischen Materialien, Gläsern, Emaillen, in kosmetischen Formulierungen, zur Herstellung von Pigmentanteigungen mit Wasser, organischen und/oder wässrigen Lösemitteln, zur Herstellung von Pigmentpräparationen und Trockenpräparaten.

11. Verwendung des beschichteten Zinksulfidpigments nach Anspruch 10 in glasfaser-verstärkten Polyamiden.

12. Formulierungen enthaltend das beschichtete Zinksulfidpigment nach einem oder mehreren der Ansprüche 1 bis 7.

13. Polymermatrix enthaltend das beschichtete Zinksulfidpigment nach einem oder mehreren der Ansprüche 1 bis 7.

## Claims

1. Coated zinc sulfide pigment, **characterised in that** it is coated on the surface with SiO₂ agglomerates.

2. Coated zinc sulfide pigment according to Claim 1, **characterised in that** the zinc sulfide has particle sizes of 0.001 - 100 µm.

3. Coated zinc sulfide pigment according to Claim 1 or 2, **characterised in that** the substrate used is an inorganically or organically pretreated zinc sulfide pigment.

4. Coated zinc sulfide pigment according to one or more of Claims 1 to 3, **characterised in that** the zinc sulfide pigment is oval, spherical, rod-shaped or platelet-shaped.

5. Coated zinc sulfide pigment according to one or more of Claims 1 to 4, **characterised in that** the zinc sulfide pigment is spherical.

6. Coated zinc sulfide pigment according to one or more of Claims 1 to 5, **characterised in that** the SiO₂ coating on the zinc sulfide pigment has a layer thickness of 0.1 to 300 nm.

7. Coated zinc sulfide pigment according to one or more of Claims 1 to 6, **characterised in that** the SiO₂ content, based on the coated pigment, is 2 to 100%.

8. Process for the preparation of the coated zinc sulfide pigment according to one or more of Claims 1 to 7, **characterised in that** the coating of the zinc sulfide pigment with SiO₂ agglomerates is carried out in a fluidised-bed reactor, by gas-phase coating, by PVD, CVD or by wet-chemical coating.

9. Process according to Claim 8, **characterised in that**, in the case of wet-chemical coating, the zinc sulfide pigment is suspended in water and mixed with a water-glass solution at a pH which is suitable for hydrolysis, which is selected so that the SiO₂ is precipitated out directly onto the pigment, the pH is kept constant by simultaneous metered addition of a base and/or acid, and the zinc sulfide pigment coated in this way is separated off, washed, dried and subsequently calcined at 200 - 600°C and finally sieved.

10. Use of the coated zinc sulfide pigment according to one or more of Claims 1 to 7 as additive or white pigment in paints, coatings, powder coatings, printing inks, security printing inks, plastics, mouldings, ceramic materials, glasses, enamels, in cosmetic formulations, for the preparation of pigment pastes with water, organic and/or aqueous solvents, for the preparation of pigment preparations and dry preparations.

11. Use of the coated sink sulfide pigment according to Claim 10 in glass-fibre-reinforced polyamides.

12. Formulations comprising the coated zinc sulfide pigment according to one or more of Claims 1 to 7.

13. Polymer matrix comprising the coated zinc sulfide pigment according to one or more of Claims 1 to 7.

## Revendications

1. Pigment de sulfure de zinc revêtu, **caractérisé en ce qu'**il est revêtu sur la surface à l'aide d'agglomérats de SiO₂.

2. Pigment de sulfure de zinc revêtu selon la revendication 1, **caractérisé en ce que** le sulfure de zinc présente des tailles de particules de 0,001 - 100 µm.

3. Pigment de sulfure de zinc revêtu selon la revendication 1 ou 2, **caractérisé en ce que** le substrat qui est utilisé est un pigment de sulfure de zinc prétraité inorganiquement ou organiquement.

4. Pigment de sulfure de zinc revêtu selon une ou plusieurs des revendications 1 à 3, **caractérisé en ce que** le pigment de sulfure de zinc est ovale, sphérique, en forme de barreau ou en forme de plaquette.

5. Pigment de sulfure de zinc revêtu selon une ou plusieurs des revendications 1 à 4, **caractérisé en ce que** le pigment de sulfure de zinc est sphérique.

6. Pigment de sulfure de zinc revêtu selon une ou plusieurs des revendications 1 à 5, **caractérisé en ce que** le revêtement de SiO₂ sur le pigment de sulfure de zinc présente une épaisseur de couche de 0,1 à 300 nm.

7. Pigment de sulfure de zinc revêtu selon une ou plusieurs des revendications 1 à 6, **caractérisé en ce que** la teneur en SiO₂, sur la base du pigment revêtu, est de 2 % à 100 %.

8. Procédé pour la préparation du pigment de sulfure de zinc revêtu selon une ou plusieurs des revendications 1 à 7, **caractérisé en ce que** le revêtement du pigment de sulfure de zinc à l'aide d'agglomérats de SiO₂ est mis en oeuvre dans un réacteur à lit fluidisé, au moyen d'un revêtement en phase gazeuse, au moyen d'un procédé PVD, CVD ou au moyen d'un revêtement chimique par voie humide.

9. Procédé selon la revendication 8, **caractérisé en ce que**, dans le cas du revêtement chimique par voie humide, le pigment de sulfure de zinc est suspendu dans de l'eau et est mélangé avec une solution eau-verre à un pH qui convient pour l'hydrolyse, laquelle est sélectionnée de telle sorte que le SiO₂ soit précipité directement sur le pigment, le pH est maintenu constant au moyen de l'ajout mesuré simultané d'une base et/ou d'un acide, et le pigment de sulfure de zinc qui est revêtu de cette façon est récupéré par séparation, est lavé, est séché et est ensuite soumis à calcination à 200 - 600°C et pour finir, est tamisé.

10. Utilisation du pigment de sulfure de zinc revêtus selon une ou plusieurs des revendications 1 à 7 en tant qu'additif ou que pigment blanc dans les peintures, les revêtements, les revêtements pulvérulents, les encres d'impression, les encres d'impression de sécurité, les matières plastiques, les moulages, les matériaux de céramique, les verres, les émaux, dans les formulations cosmétiques, pour la préparation de pâtes pigmentaires avec de l'eau, de solvants organiques et/ou aqueux, pour la préparation de préparations de pigment(s) et de préparations sèches.

11. Utilisation du pigment de sulfure de zinc revêtu selon la revendication 10 dans les polyamides renforcés par fibres de verre.

12. Formulations comprenant le pigment de sulfure de zinc revêtu selon une ou plusieurs des revendications 1 à 7.

13. Matrice polymère comprenant le pigment de sulfure de zinc revêtu selon une ou plusieurs des revendications 1 à 7.
